# FASCICULE DE BREVET EUROPEEN

(11) **EP 3 118 383 B1**
(45) Date de publication et mention de la délivrance du brevet: **11.04.2018**
(21) Numéro de dépôt: 16179801.2
(22) Date de dépôt: 15.07.2016
(51) Int. Cl.: E04B 1/74, F24F 5/00, F24F 12/00, F24J 2/04, E04B 2/88

(54) **FAÇADE VITRÉE D'AMÉLIORATION DES PERFORMANCES ÉNERGÉTIQUES D'UN BÂTIMENT EXISTANT ET PROCÉDÉ DE RÉNOVATION THERMIQUE CORRESPONDANT**
GLASFASSADE ZUR VERBESSERUNG DER ENERGIELEISTUNGSWERTE EINES EXISTIERENDEN GEBÄUDES, UND ENTSPRECHENDES THERMISCHES SANIERUNGSVERFAHREN
GLAZED FAÇADE FOR IMPROVING THE ENERGY EFFICIENCY OF AN EXISTING BUILDING AND CORRESPONDING THERMAL RENOVATION METHOD

(30) Priorité: 16.07.2015 FR 1556696
(43) Date de publication de la demande: 18.01.2017
(73) Titulaire: Franck Boutte Consultants, 75019 Paris (FR)
(72) Inventeur: BOUTTE, Franck, 93300 AUBERVILLIERS (FR)
(74) Mandataire: Marconnet, Sébastien

(56) Documents cités:
- EP-A1- 2 520 870
- CN-A- 101 603 341
- DE-A1- 3 406 814
- FR-A1- 2 977 006

## Description

L'invention porte sur une façade vitrée d'amélioration des performances énergétiques d'un bâtiment existant, ainsi que sur le procédé de rénovation thermique d'un bâtiment correspondant.

L'amélioration des performances énergétiques des bâtiments anciens mal isolés thermiquement est de façon connue réalisée soit par l'intérieur, soit par l'extérieur du bâtiment. Toutefois, la réalisation d'une isolation par l'intérieur nécessite des travaux parfois en site occupé et engendre une perte d'espace pouvant occasionner la reconfiguration des différentes pièces du bâtiment. L'isolation par l'extérieur a pour inconvénient de modifier l'aspect esthétique de la façade, ce qui tend à dénaturer le patrimoine architectural existant.

Le document EP2520870 décrit un module passager de collecteur solaire comprenant un panneau transparent et un panneau absorbant la chaleur, séparés l'un de l'autre par une chambre à air et assemblés dans un cadre.

Le document CN101603341 décrit une double paroi de rideau portée par une structure de bâtiment. La double paroi de rideau comprend des plaques de support horizontales qui s'étendent le long d'un élément de support d'une fenêtre d'une paroi de rideau intérieure dans chaque couche de la structure de bâtiment.

L'invention vise donc à remédier à ces inconvénients en proposant la mise en place d'un système d'amélioration des performances thermiques d'un bâtiment existant selon la première revendication.

L'invention permet ainsi de conserver inchangées les façades du bâtiment à rénover du fait de la mise en place de vitrages transparents de part et d'autre du bâtiment tout en permettant d'améliorer l'efficacité énergétique du bâtiment en adaptant les températures autour du bâtiment par sélection du mode conservatif ou dissipatif en fonction des températures extérieures.

Le premier dispositif de contrôle comporte, du côté de chaque façade dudit bâtiment,
- un premier et un deuxième dispositif de commutation positionnés respectivement en partie inférieure et en partie supérieure de chaque façade,
- chaque dispositif de commutation gradué étant mobile entre une position au minimum fermée et une position au maximum ouverte autorisant le passage de l'air.

Selon une réalisation, lesdits dispositifs de commutation sont constitués chacun par une pluralité d'ailettes pivotantes asservies et positionnées les unes à côté des autres.

Selon une réalisation, une unité de contrôle est apte à commander un degré d'ouverture desdits premier et deuxième dispositifs de commutation en fonction de températures et irradiations mesurées à l'intérieur desdites lames d'air et d'une température externe et interne.

Ledit système comporte un échangeur de chaleur en mode conservatif apte à assurer un transfert énergétique entre un air frais renouvelé et réchauffé circulant à l'intérieur d'un circuit de distribution interne de l'air dans ledit bâtiment et un air vicié repris dans les lames d'air.

Selon une réalisation, un deuxième dispositif de contrôle comporte une centrale de traitement et un dispositif de court-circuit de l'échangeur de chaleur configurés de telle façon que
- dans un fonctionnement en mode conservatif, ladite centrale de traitement fonctionne avec deux ventilateurs pour pouvoir respectivement souffler dans le bâtiment un air neuf et pour évacuer vers l'extérieur un air vicié par des tampons, alors que ledit dispositif de court-circuit est désactivé pour permettre à l'échangeur de récupérer des calories des lames d'air, et
- dans un fonctionnement en mode dissipatif, ladite centrale de traitement en air fonctionne avec un seul ventilateur pour souffler un air neuf dans le bâtiment, alors que le dispositif de court-circuit est activé pour court-circuiter ledit échangeur de chaleur.

Selon une réalisation, différents niveaux dudit bâtiment sont destinés à être en communication avec une lame d'air de ladite façade correspondante via des grilles de transfert pour assurer cette reprise de l'air vicié.

Chaque vitrage est destiné à recouvrir au moins 70% d'une surface de la façade existante correspondante, voire plus de la totalité de la surface de la façade existante.

L'invention a également pour objet un procédé de rénovation d'un bâtiment existant pour en améliorer les performances thermiques selon la revendication 6.

L'invention sera mieux comprise à la lecture de la description qui suit et à l'examen des figures qui l'accompagnent. Ces figures ne sont données qu'à titre illustratif mais nullement limitatif de l'invention.

La figure 1 illustre un fonctionnement hivernal du système d'amélioration des performances énergétiques selon la présente invention installé sur un bâtiment vu en coupe;

Les figures 2a et 2b sont des représentations graphiques de l'évolution de la température dans les lames d'air des façades au cours d'une semaine du mois de janvier;

La figure 3 illustre un fonctionnement estival du système d'amélioration des performances énergétiques d'un bâtiment selon la présente invention;

La figure 4a et 4b illustrent respectivement un fonctionnement mi-saison et un fonctionnement en été la nuit du système d'amélioration des performances énergétiques d'un bâtiment selon la présente invention.

Les éléments identiques, similaires, ou analogues conservent la même référence d'une figure à l'autre.

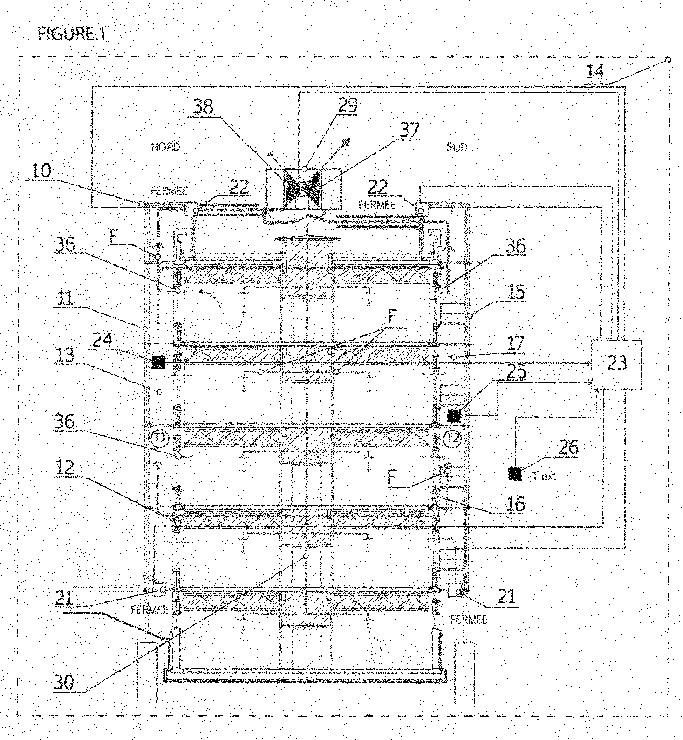

La figure 1 montre un système 10 d'amélioration des performances thermiques d'un bâtiment existant 14 comportant un premier vitrage 11 rapporté positionné en regard d'une première façade 12 de manière à créer une première lame d'air 13 du côté de la première façade 12; et un deuxième vitrage 15 rapporté positionné en regard d'une deuxième façade 16 manière à créer une deuxième lame d'air 17 du côté de la deuxième façade 16. Autrement dit, chaque lame d'air 13, 17 est contenue dans un tampon délimité par la façade 12, 16 et le vitrage 11, 15 en regard correspondant. Chaque vitrage 11, 15 est destiné à recouvrir au moins 70% de la surface de la façade 12, 16 correspondante, voire plus de la totalité.

En outre, chaque tampon et donc chaque lame d'air 13, 17 est continue suivant toute la hauteur de la façade 12, 16 correspondante, c'est-à-dire qu'il n'existe pas d'obstacle pour la lame d'air 13, 17 entre deux étages consécutifs du bâtiment 14.

Il est à noter également que l'épaisseur de la lame d'air 13, 17 est importante, dans la mesure où l'écart entre la façade 12, 16 et un vitrage 11, 15 correspondant autorise le passage d'une nacelle et d'un opérateur sur toute la hauteur du bâtiment, notamment pour l'entretien des façades.

La première et la deuxième façade 12, 16 sont de préférence opposées l'une par rapport à l'autre en termes d'irradiation. Ainsi, la première façade 12 pourra par exemple être une façade orientée Nord, tandis que la deuxième façade 16 pourra par exemple être une façade orientée Sud. Les vitrages 11, 15 pourront par exemple être formés chacun par une pluralité de panneaux vitrés positionnés bord à bord.

Deux dispositifs de contrôle sont aptes à faire fonctionner le système 10 sélectivement dans un mode conservatif dans lequel la première et/ou la deuxième lames d'air 13, 17 isolent thermiquement les façades 12, 16, ou dans un mode dissipatif dans lequel un courant d'air est créé par la première et/ou la deuxième lames d'air 13 ,17 de manière à évacuer les calories accumulées au niveau des façades 12, 16.

A cet effet, le premier dispositif de contrôle comporte, du côté de chaque façade 12, 16, un premier 21 et un deuxième 22 dispositifs de commutation positionnés respectivement en partie inférieure et en partie supérieure de chaque façade 12, 16. Chaque dispositif de commutation 21, 22 est mobile de manière graduée entre une position fermée bloquant le passage de l'air et une position ouverte autorisant le passage de l'air.

Les dispositifs de commutation 21, 22 sont à ouverture réglable. Les dispositifs 21, 22 comportent par exemple une pluralité de panneaux comportant des ailettes pivotantes asservies, dites ventelles, positionnées les unes à côté des autres. Le réglage de l'ouverture des dispositifs 21, 22 peut être réalisé par sélection d'une fraction du nombre de panneaux comportant les ventelles.

Une unité de contrôle 23 commande le degré d'ouverture des dispositifs à ventelles 21, 22 en fonction de températures et irradiations mesurées à l'intérieur des lames d'air 13, 17 et de températures externe et interne au bâtiment 14. A cette fin, des capteurs 24, 25 et 26 correspondants sont positionnés respectivement à l'intérieur des lames d'air 13, 17 et à l'intérieur et à l'extérieur du bâtiment 14. Un algorithme prédictif de l'évolution de température des lames d'air 13, 17 pourra également être mis en oeuvre afin de commander l'ouverture et la fermeture des dispositifs à ventelles 21, 22 en tenant compte de l'inertie thermique des lames d'air 13, 17.

Un échangeur de chaleur 29 est apte à assurer un transfert énergétique entre un air frais renouvelé circulant à l'intérieur d'un circuit de distribution interne 30 de l'air dans le bâtiment 14 et un air vicié repris dans les lames d'air 13, 17. Le circuit de distribution interne 30 pourra comporter de façon connue en soi un ensemble de conduits munis de piquages permettant d'acheminer l'air aux différents niveaux du bâtiment 14. Ces différents niveaux du bâtiment 14 sont destinés à être en communication, via des grilles de transfert 36, avec une lame d'air 13, 17 de la façade 12, 16 correspondante de manière à autoriser le passage de l'air des différents niveaux vers les lames d'air 13, 17.

En outre, le deuxième dispositif de contrôle comporte un dispositif de court-circuit 35 de l'échangeur 29 et une centrale de traitement de l'air. La centrale de traitement de l'air comporte un premier ventilateur 37 pour souffler dans le bâtiment un air neuf dans le circuit de distribution interne 30 et un deuxième ventilateur 38 pour extraire en vrac l'air vicié par chaque tampon en mode conservatif. L'air frais renouvelé pourra pénétrer à l'intérieur du bâtiment 14 dans le circuit 30 par l'intermédiaire d'une ouverture réalisée par exemple au niveau du toit.

On décrit ci-après en référence avec les figures 1, 3, 4a, et 4b, le fonctionnement du système 10 d'amélioration des performances énergétiques selon la présente invention. Le sens de circulation de l'air à l'intérieur et autour du bâtiment 14 dans les lames d'air 13, 17 est indiqué par les flèches F sur les figures.

Dans le cas d'un fonctionnement hivernal illustré par la figure 1, l'unité de contrôle 23 commande la fermeture des dispositifs à ventelles inférieur 21 et supérieur 22. On crée ainsi deux lames d'air 13, 17 isolantes de part et d'autre du bâtiment 14, ce qui correspond au fonctionnement en mode conservatif du système 10.

La centrale de traitement fonctionne alors avec les deux ventilateurs 37, 38 pour pouvoir respectivement souffler dans le bâtiment un air neuf et pour évacuer vers l'extérieur l'air vicié par les tampons. L'échangeur 29 sur l'air extrait en tête de tampon permet la récupération des calories, mais aussi des apports solaires reçus sur les tampons. Le dispositif 35 est alors désactivé.

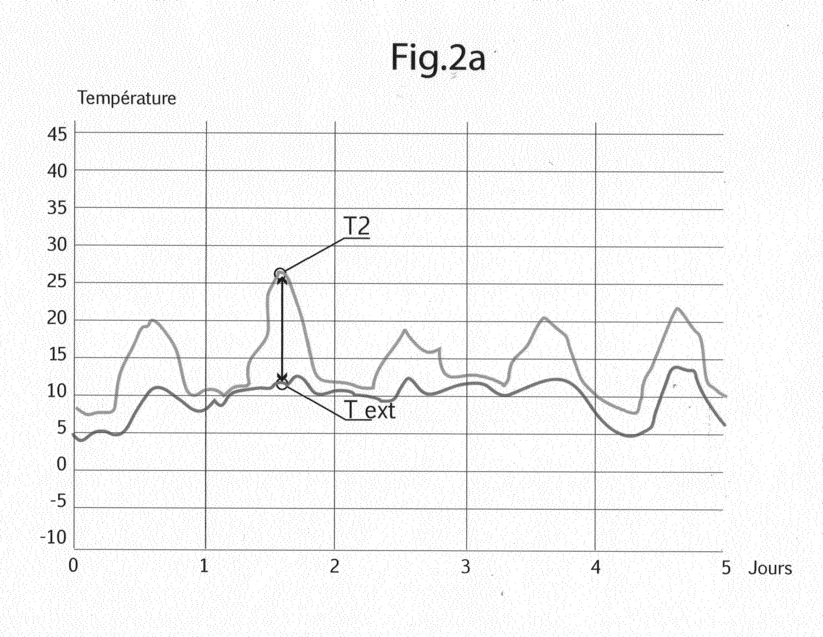

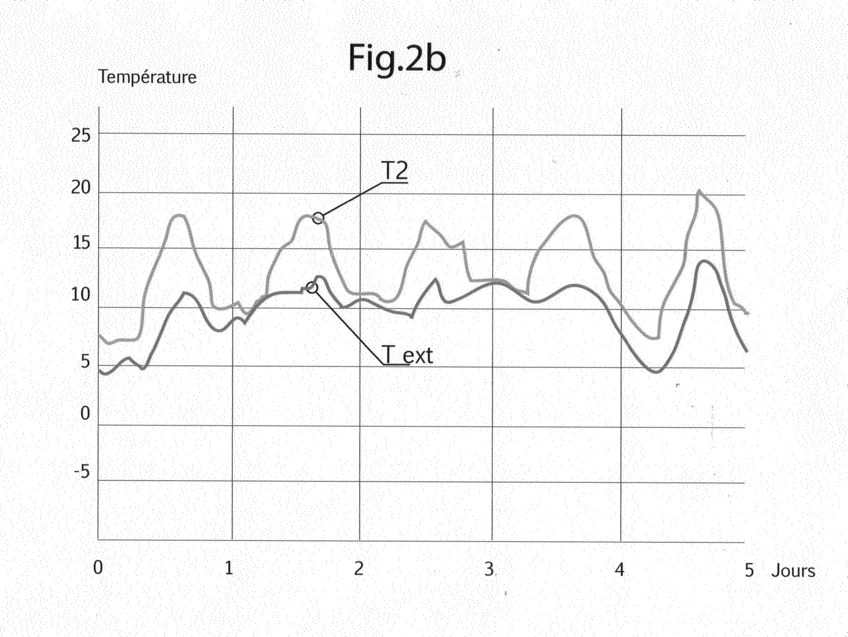

Les figures 2a et 2b mettent en évidence que les températures T1, T2 des lames d'air 13, 17 dont les calories sont prélevées est supérieure jusqu'à 20°C au Sud (cf. courbe T2 de la figure 2a) et jusqu'à 10°C au Nord (cf. courbe T1 de la figure 2b) par rapport à la température extérieure Text. L'invention permet ainsi de limiter efficacement la consommation énergétique du bâtiment 14.

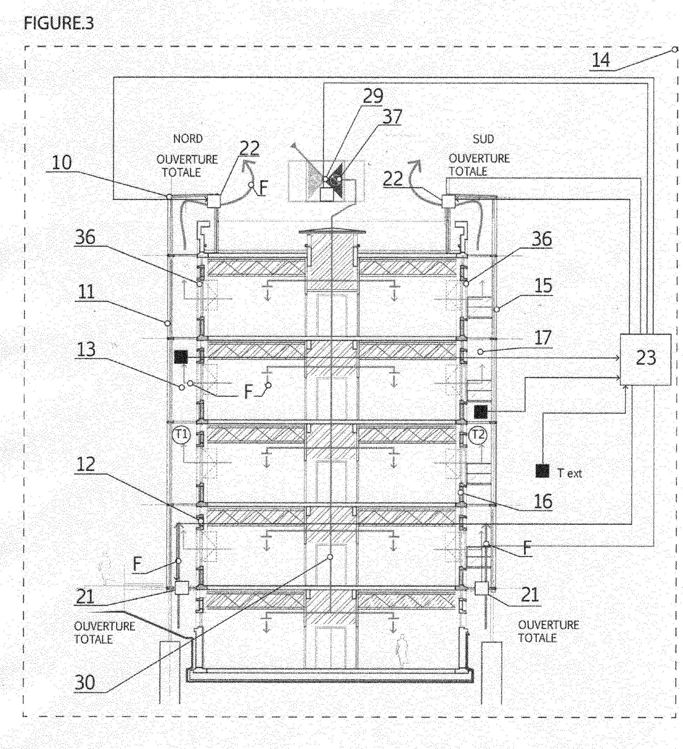

Dans le cas d'un fonctionnement estival illustré par la figure 3, l'unité de contrôle 23 commande l'ouverture des dispositifs à ventelles inférieur 21 et supérieur 22. Du fait d'un phénomène de convection, cela permet de mettre en mouvement les lames d'air 13, 17 de part et d'autre du bâtiment 14 de manière à créer un courant d'air rafraichissant, ce qui correspond au fonctionnement dissipatif du système 10. La vitesse des lames d'air 13, 17 favorise la dissipation de la chaleur.

La centrale de traitement en air fonctionne avec un seul ventilateur 37 pour souffler de l'air neuf dans le bâtiment, l'extraction de l'air se faisant naturellement dans les tampons avec les dispositifs à ventelles 21, 22 ouverts. L'échangeur 29 sur la récupération est par conséquent court-circuité par activation du dispositif 35.

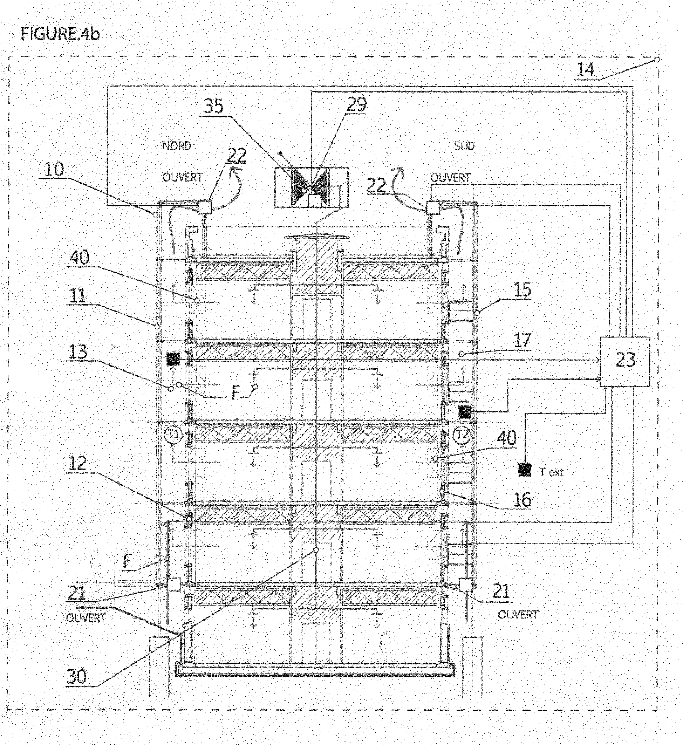

Ce dispositif de ventilateur naturel fonctionne également pour la surventilation nocturne illustré par la figure 4b. La configuration du système 10 permet en effet d'autoriser l'ouverture des fenêtres 40 des pièces en protégeant le bâtiment 14 contre la pluie, les volatils ou les risques d'intrusion. Cela permet d'assurer un renouvellement complet de l'air intérieur en très peu de temps, ce que n'autorise pas une solution classique d'isolation d'enveloppe. L'échangeur de chaleur 29 est dans ce cas court-circuité.

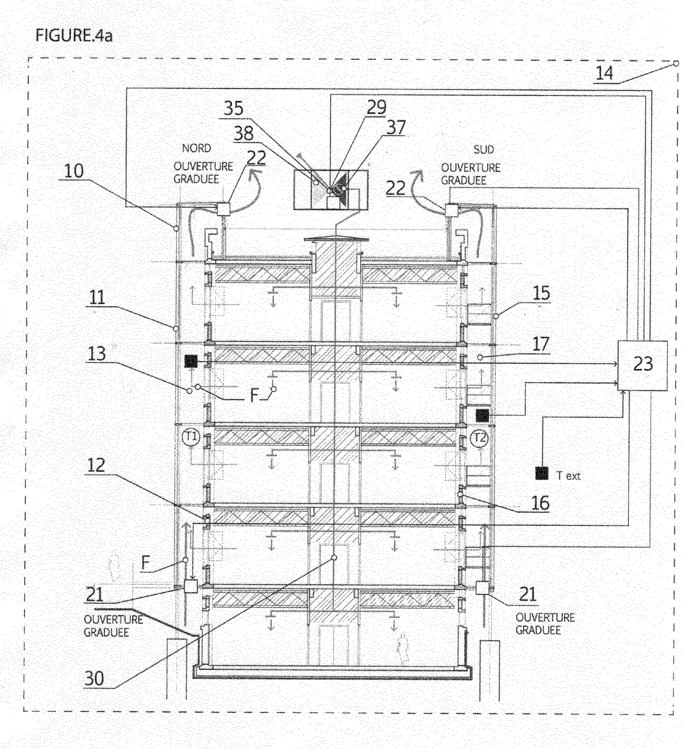

Dans le cas d'un fonctionnement mi-saison illustré par la figure 4a, le degré d'ouverture des dispositifs à ventelles 21, 22 devient modulable selon la température extérieure et celle des lames d'air 13, 17. L'unité de contrôle 23 peut alors commander une ouverture totale ou partielle des dispositifs à ventelles inférieur 21 et/ou supérieur 22, ce qui permet d'adapter précisément localement le climat autour du bâtiment 14.

En effet, des situations thermiques différentes existent en fonction des orientations et des étages du fait d'une stratification de l'air chaud dans les lames d'air 13, 17. L'unité de contrôle 23 pourra alors différencier la nécessité d'un soufflage d'air chaud en façade Nord 12 et d'un soufflage d'air sans récupération de calories en façade Sud 16. L'échangeur 29 pourra être court-circuité ou non en fonction des besoins de chauffage.

L'invention concerne en outre un procédé de rénovation d'un bâtiment existant 14 pour en améliorer les performances thermiques. Suivant ce procédé, un premier vitrage 11 rapporté est installé en regard de la première façade 12 de manière à créer une première lame d'air 13 du côté de ladite première façade 12. Un deuxième vitrage 15 rapporté est installé en regard de la deuxième façade 16 de manière à créer une deuxième lame d'air 17 du côté de ladite deuxième façade 16.

On installe ensuite les dispositifs de contrôle précités aptes à faire fonctionner le système 10 d'amélioration des performances thermique sélectivement notamment:
- dans un mode conservatif dans lequel la première et/ou la deuxième lames d'air 13, 17 isolent thermiquement lesdites façades 12, 16, ou
- dans un mode dissipatif dans lequel les calories accumulées au niveau desdites façades dudit bâtiment sont évacuées par création d'un courant d'air.

Bien entendu, la description qui précède a été donnée à titre d'exemple uniquement et ne limite pas le domaine de l'invention dont l'étendue est définie par les revendications jointes à la présente description, et dont on ne sortirait pas en remplaçant les différents éléments par tous autres équivalents.

## Revendications

1. Système (10) d'amélioration des performances thermiques d'un bâtiment existant (14) comportant:
- un premier vitrage (11) rapporté destiné à être positionné devant une première façade (12) dudit bâtiment (14) de manière à créer une première lame d'air (13) du côté de ladite première façade (12),
- un deuxième vitrage (15) rapporté destiné à être positionné devant une deuxième façade (16) dudit bâtiment (14) opposée en termes d'irradiation solaire par rapport à ladite première façade (12), de manière à créer une deuxième lame d'air (17) du côté de ladite deuxième façade (16),
- chaque vitrage (11, 15) étant destiné à recouvrir au moins 70% d'une surface de la façade (12, 16) correspondante, voire plus de la totalité de la surface de la façade (12, 16) existante, où le système (10) comporte en outre:
- deux dispositifs de contrôle aptes à faire fonctionner ledit système (10) d'amélioration des performances thermique sélectivement notamment:
dans un mode conservatif dans lequel ladite première et/ou ladite deuxième lames d'air (13, 17) isolent thermiquement lesdites façades (12, 16), et dans un mode dissipatif dans lequel des calories sont évacuée au niveau desdites façades (12, 16) par création d'un courant d'air, et
- un premier dispositif de contrôle comportant, du côté de chaque façade (12, 16) dudit bâtiment (14),
- un premier et un deuxième dispositifs de commutation (21, 22) positionnés respectivement en partie inférieure et en partie supérieure de chaque façade (12, 16), ledit système (10) étant **caractérisé en ce que** :
- chaque dispositif de commutation (21, 22) est mobile de manière graduée entre une position au minimum fermée et une position au maximum ouverte autorisant un passage de l'air, et **en ce qu'**il comprend
- un échangeur de chaleur (29) apte à assurer, en mode conservatif, un transfert énergétique entre un air frais renouvelé et réchauffé circulant à l'intérieur d'un circuit de distribution interne (30) et un air vicié repris dans lesdites lames d'air (13, 17).

2. Système selon la revendication 1, **caractérisé en ce que** lesdits dispositifs de commutation (21, 22) sont constitués chacun par une pluralité d'ailettes pivotantes asservies positionnées les unes à côté des autres.

3. Système selon la revendication 1 ou 2, **caractérisé en ce qu'**une unité de contrôle (23) est apte à commander un degré d'ouverture desdits premier et deuxième dispositifs de commutation (21, 22) en fonction de températures et irradiations mesurées à l'intérieur desdites lames d'air (13, 17) et d'une température externe et interne.

4. Système selon l'une quelconque des revendications 1 à 3, **caractérisé en ce qu'**un deuxième dispositif de contrôle comporte une centrale de traitement et un dispositif de court-circuit (35) de l'échangeur de chaleur configurés de telle façon que
- dans un fonctionnement en mode conservatif, ladite centrale de traitement fonctionne avec deux ventilateurs (37, 38) pour pouvoir respectivement souffler dans le bâtiment un air neuf et pour évacuer vers l'extérieur un air vicié par des tampons, alors que ledit dispositif de court-circuit (35) est désactivé pour permettre à l'échangeur (29) de récupérer des calories des lames d'air (13, 17), et
- dans un fonctionnement en mode dissipatif, ladite centrale de traitement en air fonctionne avec un seul ventilateur (37) pour souffler un air neuf dans le bâtiment, alors que ledit dispositif de court-circuit (35) est activé pour court-circuiter ledit échangeur de chaleur (29).

5. Système selon l'une quelconque des revendications 1 à 4, **caractérisé en ce que** différents niveaux dudit bâtiment (14) sont destinés à être en communication avec une lame d'air (13, 17) de ladite façade (12, 16) correspondante via des grilles de transfert (36) pour assurer ladite reprise dans lesdites lames d'air (13, 17).

6. Procédé de rénovation d'un bâtiment existant (14) pour en améliorer les performances thermiques, comportant :
- une étape d'installation d'un premier vitrage (11) rapporté en regard d'une première façade (12) dudit bâtiment (14) de manière à créer une première lame d'air (13) du côté de ladite première façade (12),
- une étape d'installation d'un deuxième vitrage (15) rapporté en regard d'une deuxième façade (16) dudit bâtiment (14) opposée en termes d'irradiation solaire par rapport à ladite première façade (12), de manière à créer une deuxième lame d'air (17) du côté de ladite deuxième façade (16), lesdits premier et deuxième vitrages (11, 15) appartenant à un système (10) d'amélioration des performances
- chaque vitrage (11, 15) étant destiné à recouvrir au moins 70% d'une surface de la façade (12, 16) correspondante, voire plus de la totalité de la surface de la façade (12, 16) existante,
où ledit procédé comporte en outre:
- une étape de mise en place de deux dispositifs de contrôle aptes à faire fonctionner ledit système (10) d'amélioration des performances thermique sélectivement notamment:
- dans un mode conservatif dans lequel ladite première et/ou ladite deuxième lames d'air (13, 17) isolent thermiquement lesdites façades (12, 16), et
- dans un mode dissipatif dans lequel les calories accumulées au niveau desdites façades dudit bâtiment sont évacuées par création d'un courant d'air,
où un premier dispositif de contrôle comporte, du côté de chaque façade (12,16) dudit bâtiment (14), un premier et un deuxième dispositifs de commutation (21, 22) positionnés respectivement en partie inférieure et en partie supérieure de chaque façade (12,16),
ledit procédé étant **caractérisé en ce que** :
- chaque dispositif de commutation (21,22) est mobile de manière graduée entre une position au minimum fermée et une position au maximum ouverte autorisant un passage de l'air,
et **en ce qu'**il comporte
- une étape de mise en place d'un échangeur de chaleur (29) apte à assurer, en mode conservatif, un transfert énergétique entre un air frais renouvelé et réchauffé circulant à l'intérieur d'un circuit de distribution interne (30) et un air vicié repris dans lesdites lames d'air (13, 17).

## Patentansprüche

1. System (10) zur Verbesserung der Wärmeleistung eines bestehenden Gebäudes (14), umfassend:
- eine erste angebaute Glasplatte (11), die vor einer ersten Fassade (12) des Gebäudes (14) zur Erzeugung eines ersten Luftspalts (13) an der Seite der ersten Fassade (12) positioniert werden soll,
- eine zweite aufgebaute Glasplatte (15), die vor einer der ersten Fassade (12) im hinsichtlich der Sonneneinstrahlung entgegengesetzten zweiten Fassade (16) des Gebäudes (14) zum Erzeugung einer zweiten Luftspalt (17) an der Seite der zweiten Fassade (16) positioniert werden soll,
- wobei jede Glasplatte (11, 15) mindestens 70% einer Oberfläche der entsprechenden Fassade (12, 16) oder sogar mehr als die Gesamtoberfläche der bestehenden Fassade (12, 16) abdecken soll,
wobei das System (10) ferner umfasst:
- zwei Steuervorrichtungen für das selektive Betreiben des Systems (10) zur Verbesserung der Wärmeleistung insbesondere:
in einem konservativen Modus, in dem die ersten und/oder zweiten Luftspalte (13, 17) die Fassaden (12, 16) thermisch isolieren, und
in einem dissipativen Modus, in dem Kalorien an den Fassaden (12, 16) durch Erzeugung eines Luftstromes abgebaut werden, und
- wobei eine erste Steuervorrichtung an der Seite jeder Fassade (12, 16) des Gebäudes (14)
- eine erste und ein zweite Umschaltungsvorrichtung (21, 22) umfasst, die jeweils am unteren Teil und am oberen Teil jeder Fassade (12, 16) positioniert sind, das System (10) **dadurch gekennzeichnet, dass**:
- jede Umschaltungsvorrichtung (21, 22) zwischen einer geschlossenen Minimalstellung und einer offenen, einen Luftdurchfluss ermöglichenden Maximalstellung stufenweise beweglich ist,
und dass
- es einen Wärmeaustauscher (29) umfasst, der eingerichtet ist, in einem konservativen Modus eine energetische Übertragung zwischen einer frischen, erneuerten, erhitzten und in einem internen Verteilerkreislauf (30) zirkulierenden Luft und einer verbrauchten, von den Luftspalten zurückgewonnenen Luft (13, 17) sicherzustellen.

2. System nach Anspruch 1, **dadurch gekennzeichnet, dass** die Umschaltungsvorrichtungen (21, 22) jeweils aus einer Vielzahl von schwenkbaren, nebeneinander angeordneten und gesteuerten flügeln bestehen.

3. System nach Anspruch 1 oder 2, **dadurch gekennzeichnet, dass** eine Steuereinheit (23) in der Lage ist, einen Öffnungsgrad für die ersten und zweiten Umschaltungsvorrichtungen (21, 22) in Abhängigkeit von innerhalb der Luftspalte (13, 17) gemessenen Temperaturen und Bestrahlungen und einer Außen- und Innentemperatur zu steuern.

4. System nach einem der Ansprüche 1 bis 3, **dadurch gekennzeichnet, dass** eine zweite Steuervorrichtung eine zentrale Verarbeitungseinheit und ein Kurzschlussvorrichtung (35) für die Wärmetauscher aufweist, die so konfiguriert sind, dass
- in einem konservativen Betriebsmodus die zentrale Verarbeitungseinheit mit zwei Lüftern (37, 38) jeweils zum Blasen einer frischen Luft in das Gebäude und zum Abführen einer verbrauchten Luft durch Puffer nach außen arbeitet, während die Kurzschlussvorrichtung (35) deaktiviert ist, sodass der Wärmetauscher (29) Kalorien aus den Luftspalten (13, 17) zurückgewinnen kann, und
- in einem dissipativen Betriebsmodus die zentrale Verarbeitungseinheit mit einem einzigen Lüfter (37) zum blasen einer frischen Luft in die Gebäude arbeitet, während die Kurzschlussvorrichtung (35) zum Kurzschließen des Wärmetauschers (29) aktiviert ist.

5. System nach einem der Ansprüche 1 bis 4, **dadurch gekennzeichnet, dass** verschiedene Ebenen des Gebäudes (14) in Verbindung mit einem Luftspalt (13, 17) der entsprechenden Fassade (12, 16) durch Überführungsgitter (36) stehen soll, um diese Zurückgewinnung aus diesen Luftspalten (13, 17) sicherzustellen.

6. Verfahren zur Renovierung eines bestehenden Gebäudes (14) zur Verbesserung Wärmeleistung davon, umfassend:
- einen Installationsschritt für eine erste angebaute Glasplatte (11) vor einer ersten Fassade (12) des Gebäudes (14) zur Erzeugung eines ersten Luftspaltes (13) an der Seite der ersten Fassade (12),
- einen Installationsschritt für eine zweite angebaute Glasplatte (15) vor einer der ersten Fassade (12) im hinsichtlich der Sonneneinstrahlung entgegengesetzten zweiten Fassade (16) des Gebäudes (14) zum Erzeugen eines zweiten Luftspalts (17) an der Seite der zweiten Fassade (16), wobei die erste und die zweite Glasplatte (11, 15) zu einem System (10) zum Verbessern der Leistung gehören,
- wobei jede Glasplatte (11, 15) mindestens 70% einer Oberfläche der entsprechenden Fassade (12, 16) oder sogar mehr als die Gesamtoberfläche der bestehenden Fassade (12, 16) abdecken soll,
wobei das Verfahren ferner umfasst:
- einen Installationsschritt für zwei Steuervorrichtungen für das selektive Betreiben des Systems (10) zur Verbesserung der Wärmeleistung insbesondere:
- in einem konservativen Modus, in dem die ersten und/oder zweiten Luftspalte (13, 17) die Fassaden (12, 16) thermisch isolieren, und
- in einem dissipativen Modus, in dem an den Fassaden akkumulierte Kalorien durch Erzeugung eines Luftstromes abgebaut werden,
wobei eine erste Steuervorrichtung an der Seite jeder Fassade (12, 16) des Gebäudes (14) eine erste und eine zweite Umschaltungsvorrichtung (21, 22) umfasst, die jeweils im unteren Teil und im oberen Teil jeder Fassade (12, 16) positioniert sind,
das Verfahren **dadurch gekennzeichnet, dass**:
- jede Umschaltungsvorrichtung (21, 22) zwischen einer geschlossenen Minimalstellung und einer offenen, einen Luftdurchfluss ermöglichenden Maximalstellung stufenweise beweglich ist,
und dass
- es einen Installationsschritt für einen Wärmeaustauscher (29) umfasst, der eingerichtet ist, in einem konservativen Modus eine energetische Übertragung zwischen einer frischen, erneuerten, erhitzten und in einem internen Verteilerkreislauf (30) zirkulierenden Luft und einer verbrauchten, von den Luftspalten zurückgewonnenen Luft (13, 17) sicherzustellen.

## Claims

1. System (10) for improving the thermal performance of an existing building (14), comprising:
- a first added glass panel (11) to be positioned in front of a first facade (12) of said building (14) so as to generate a first air gap (13) on the side of said first facade (12),
- a second added glass panel (15) to be positioned in front of a second facade (16) of said building (14) opposite, in terms of solar irradiation, to said first facade (12), so as to generate a second air gap (17) on the side of said second facade (16),
- each glass panel (11, 15) being intended to cover at least 70% of a surface of the corresponding facade (12, 16), or even more than the total surface of the existing façade (12, 16),
wherein the system (10) further comprises:
- two control devices capable of selectively operating said system (10) for improving thermal performance notably:
in a conservative mode in which said first and/or second air gaps (13, 17) thermally insulate said facades (12, 16), and
in a dissipative mode in which calories are dissipated at said facades (12, 16) by generation of a stream of air, and
- wherein a first control device comprises, on the side of each facade (12, 16) of said building (14),
- a first and a second switching device (21, 22) respectively positioned at the bottom and the superior part of each facade (12, 16),
said system (10) being **characterized in that**:
- each switching device (21, 22) is movable in a graduated manner between a closed minimum position and an open maximum position allowing a passage of air,
and **in that** it comprises
- a heat exchanger (29) adapted to ensure, in a conservative mode, an energetic transfer between a fresh air, renewed and heated, circulating inside an internal distribution circuit (30) and a polluted air recovered from said air gaps (13, 17).

2. System according to claim 1, **characterized in that** said switching devices (21, 22) are each constituted by a plurality of pivoting controlled blades positioned next to one another.

3. System according to claim 1 or 2, **characterized in that** a control unit (23) is able to control a degree of opening of said first and second switching devices (21, 22) according to of temperatures and irradiations measured inside said air gaps (13, 17) and an external and an internal temperature.

4. System according to any one of the claims 1 to 3, **characterized in that** a second control device comprises a central processing unit and a short-out device (35) for the heat exchanger, which are configured so that
- in a conservative mode operation, said central processing unit operates with two fans (37, 38) for respectively blowing a fresh air into the building and evacuating a vitiated air to the outside through buffers, whereas said short-out device (35) is deactivated in order to allow the exchanger (29) to recover calories from the air gaps (13, 17), and
- in a dissipative mode operation, said central processing unit operates with a single fan (37) for blowing fresh air into the building, while said short-out device (35) is activated in order to short-out said heat exchanger (29).

5. System according to any one of the claims 1 to 4, characterized that different levels of said building (14) are intended to be in communication with an air gap (13, 17) of said corresponding facade (12, 16) through transfer grids (36) to ensure said recovery from said air gaps (13, 17).

6. Method for renovating an existing building (14) to improve thermal performance thereof, comprising:
- a step of installing a first added glass panel (11) in front of a first facade (12) of said building (14) so as to generate a first air gap (13) on the side of said first facade (12),
- a step of installing a second added glass panel (15) in front of a second facade (16) of said building (14) opposite, in terms of solar irradiation, to said first facade (12) so as to generate a second air gap (17) on the side of said second facade (16), said first and second glass panels (11, 15) belonging to a system (10) for improving performance,
- each glass panel (11, 15) being intended to cover at least 70% of a surface of the corresponding facade (12, 16), or even more than the total surface of the existing façade (12, 16),
wherein said method further comprises:
- a step of installing two control devices capable to selectively operate said system (10) for improving thermal performance notably:
- in a conservative mode in which said first and/or second air gaps (13, 17) thermally insulate said facades (12, 16), and
- in a dissipative mode in which the accumulated calories at said facades of said building are dissipated by generating a stream of air,
wherein a first control device comprises, on the side of each facade (12, 16) of said building (14), a first and a second switching device (21, 22) respectively positioned in the lower part and in the upper part of each facade (12, 16), said method being **characterized in that**:
- each switching device (21, 22) is movable in a graduated manner between a closed minimum position and an open maximum position allowing a passage of air,
and **in that** it comprises
- a step of installing a heat exchanger (29) capable of ensuring, in a conservative mode, an energy transfer between a fresh air, renewed and heated, circulating inside an internal distribution circuit (30) and a vitiated air recovered from said air gaps (13, 17).
